# EUROPEAN PATENT APPLICATION

(11) **EP 1 816 724 A2**
(43) Date of publication of application: **08.08.2007**
(21) Application number: 06380325.8
(22) Date of filing: 19.12.2006
(51) Int. Cl.: H02J 13/00

(54) **Electrical installations management system and method**

(30) Priority: 19.12.2005 ES 200503115
(71) Applicant: K-Lon Control s.a., Isla de la cartuja, 41092 Sevilla (ES)
(72) Inventor: Amoros Marin, Roberto, Isla de la Cartuja, 41092 Sevilla (ES); Sanchez Pagan, Salvador, Isla de la Cartuja, 41092 Sevilla (ES)
(74) Representative: Carpintero Lopez, Francisco

(57) **Abstract**

The invention relates to a method and system for managing electrical installations, comprising a Master Module (1) connected to slave Modules (2, 3, 4, 5) through an internal communications bus. An Analog Input Module (2) reads analog input signals (31) coming from the installations, an Analog Output Module (3) regulates the values of the analog output signals (32), a Digital Input Module (4) detects changes in the status of digital input signals (31), and a Digital Output Module (5) activates or deactivates the digital output signals (32). The Master Module (1) has external communications interfaces that provide the system with flexibility and capacity to interact with remote database (28) or Internet (29) servers, send SMS messages (26), emails (27) and even send gathered data to a remote information management application (30).

## Description

### OBJECT OF THE INVENTION

The present invention is applicable to the intelligent management of different electrical installations, such as lighting, air-conditioning, hot air producing installations, etc., present in specific types of buildings that due to their characteristics are ideal candidates for making efficient use of electricity.
In general, the objectives of the method and system of the invention disclosed herein are to achieve energy savings for any installation that consumes electricity, including those that operate using alternative energy such as solar power; integration and interaction of the elements that integrate said electrical installation with other similar installations contemplated in a building; as well as gathering data on them, on the basis of which it is possible to calibrate, promote and improve the functioning of such installations.

### BACKGROUND OF THE INVENTION

Nowadays, there are countless installations that possess electric devices that consume a large amount of energy and which are not suitably managed in a way that could generate efficiency and energy saving.

Energy consumption has shot up in recent years and consequently, it is becoming evermore necessary to equip installations with an intelligent and independent manager that makes it possible, without hindering the efficacy of the functioning of each and every one of the electrical installations implemented in a building, to prevent overall energy squandering.

Consequently, management of buildings' electricity consumption is desirable, both in a domestic environment and in an industrial one, based on gathering data issuing from the various installations (lighting, air-conditioning, etc.) that are of interest with a view to optimizing energy consumption.

### DESCRIPTION OF THE INVENTION

The proposed invention intends to resolve the problem set out above, by allowing efficient management of the energy consumption of different electrical installations, on the basis of data gathered in real time on the installations themselves, in order to provide the energy saving that is so sought after these days.

In relation to electrical installations, the intention is to contemplate both domestic appliances commonly used in the home and industrial machinery that functions connected to the power grid or lights and other fixed devices that form part of a lighting installation at a specific location, as well as items that consume electricity in offices such as for example computers, monitors, printers, photocopiers, etc.

The data considered of great use for establishing the ideal working parameters of such installations would relate to working hours, temperature levels at the location, environmental conditions in which they operate, etc.

On the basis of such data, the least adequate working conditions are identified as a result, in order to try to avoid them. For example, detection of a prolonged absence in a space or room should cause the lighting to switch off and even shutdown the air-conditioning systems in the room or area of the premises detected to be empty.

One aspect of the invention relates to a system for the autonomous intelligent management of said electrical installations. The system that is object of the invention is a modular electronic system with both analog and digital external signal control capabilities, capable of ensuring subsequent processing to then act on the installations: lighting, air-conditioning, air-extraction, hot potable water production by alternative energy such as solar and, in short, any energy-consuming element, with a view to achieving energy savings by seeking optimum electricity costs.

For this reason, the first mission of the system of the invention is to gather all the information issuing from the elements that integrate the different installations connected to the modules that constitute the system, which are described below:
- at least one Analog Input Module connected to one or several sensors that measure different parameters, for example, temperature and lighting sensors, which give analog input signals to the Analog Input Module, which comprises analog-digital conversion means to transform said analog input signals into digital information that can subsequently be processed by a Central Processing Unit (CPU) exchangeable through a digital data bus;
- at least one Analog Output Module connected to one or more external analog devices contemplated in electrical installations, such as proportional valves used in the supply of water, electric light regulators, motors to open/close natural light concealing elements, in other words, blinds, awnings, shutter doors, ..., with said external devices designed to receive analog output signals regulated by the invention's management system, with the Analog Output Module comprising the corresponding digital-analog converters to deliver the analog output signals to the external devices on the basis of the digital information received by the data bus;
- at least one Digital Input Module connected to external digital devices designed to generate digital input signals on the basis of signals that can be delivered by the differential switches of electrical boards, relays that act on motors or other elements existing in the electrical installations, with the Digital Input Module comprising high-precision detection means that instantly detect changes produced in said digital input signals;
- at least one Digital Output Module connected to actioning means or external actuators contemplated in the electrical installations, such as on/off switches for lighting, ventilation or air-conditioning/air-extraction elements, etc., with said actuators designed to receive the digital output signals generated by the system and capable of activating/deactivating said signals;
- a Master Module that contains the CPU, whereto all the previously mentioned Modules are connected as slaves, through the data bus or internal communications bus, responsible for managing the entire system through said CPU, which preferably consists of a next-generation microprocessor with integrated or locally connected means of storage, together with at least one external communications interface that ensures connectivity with other remote devices or systems via the various communication networks that are currently in existence.

Consequently, the proposed system incorporates the latest technologies in terms of communications, such as the TCP/IP protocol popularly known for its use on Internet, among other networks, capable of applying the Extensible Markup Language (XML) for use in remotely managed applications. Likewise, the external communications interface of the Master Module may be wireless to contemplate mobile GSM, GPRS and/or UMTS mobile transmissions.

The system can communicate with others such as fire or theft central alarm stations, uninterrupted power supply systems (UPS), etc., which can acquire information on the status of the described system, through the appropriate external communications interface contemplated in the Master Module as it has been defined.

Another aspect of the invention is a method for managing the electrical installations, which based on a series of analog and digital input signals issuing from the electrical installations, generates analog and/or digital output signals, whereby the functioning of said installations is controlled. The fundamental phases that define this method are as follows:
permanently reading of the values of the input and output signals in real time, that makes it possible to detect any change instantly;
generating an event when a change occurs in any of the read values, and
immediately storing the information associated to the event.
Additionally, depending on the type of change encountered in the continuous reading of the signals, an alarm signal may be generated.

With the event, which consists of a structure of digital data, following a specific format for its transmission by the management system described above outwards towards other contemplated remote systems having a database server with similar communication capacities, the following information is registered and sent:
- Date and time of the event.
- Type of event.
- Signal that produced the event.
- Status or value at which the signal that originated the event is left.

Distinction is made between the different types of recordable events, with the main defined events being as follows:
■ ALARM event
■ RECORDING or LOGGING event of analog values (analog input values)
■ RECORDING or LOGGING event of digital values (digital inputs and outputs)
■ ERROR event, distinguishing between several possible classes of errors

The information on generated events can be stored locally, forming an internal log, in the proposed management system or be extracted to a remote database, preferably in Structured Query Language, such as the MySQL databases.

Thus, the alarm signal can consist of a message for a MySQL server, but also of a POST type message for a Web or internet server, or it is possible to send an email, or mobile SMS.

The described management method is based on scenes and scenarios:
- Scene: In this context, we define as a scene a circumstance related to the functioning of one or more electrical installations that may or may not be being fulfilled in the building or location where said installations are implemented. The scene consists of two parameters, an average parameter and threshold beyond which a scene will be fulfilled. An example is to establish a scene with an analog input signal coming from a temperature detector, whose threshold is any value above 25°C. This scene will be fulfilled if the threshold is exceeded and will not be fulfilled if it is below this value.
- Scenario: In this context, we understand a scenario to be any group of scenes interrelated through logical values. In the presented example, having defined the scene described above (Scene 1) and defining a new scene with a digital input (Scene 2), instead of an analog signal, it is possible to establish a scenario such as the following: Scene 1 AND Scene 2. This scenario will be true if both scenes are fulfilled simultaneously, whereas it will be false if either of the two involved scenes is not fulfilled.

By virtue of the scenarios, the management method is dictated and the system operates as described. Preferably, any of the following parameters can intervene in the construction of a scene:
- Status of a digital input
- Reading of an analog input
- Time bands (periods of time within one same day)
- Holidays (up to 30 days in a one-year period)
- The system's hour (0 to 23)
- The system's minutes (0 to 59)

In view of the foregoing, it is possible to infer that the combination of scenes for establishing the scenarios is enormous, making it possible to construct numerous and varied operating environments.

The scenarios serve to provoke actions in the electrical installations designed to save the energy they consume, which is, definitely, the desired result to be obtained. The actions are realized through the output signals of the installations' management system.

In order to confer on the system a sufficient degree of specialization over the installations that it controls so as to act efficiently depending on its functioning status, each input and output signal consists of a series of parameters that must be configured to ensure an adequate response. Once the system has been configured, it is capable of responding to any foreseen scenario with the actions specified to be executed according to said configuration. The management system can perform any one of the following actions or several simultaneously:
- Activate/deactivate a digital output, assuming that an output signal can adopt one of two statuses: active or inactive, which translates into practical examples: air-extractor open or closed, light switched on or off, etc.
- Regulate an analog output, changing its value to an appropriate level, for example, open water valve to 50%.
- Register an event in the local log
- Send an alarm via any of the abovementioned means:
   - Email
   - SMS
   - Message to a MySQL server
   - POST message to a Web server

It is possible to construct multiple actions that combine any of the ones described. For example, when a specific scenario is being fulfilled, it is possible to simultaneously activate a digital output; the system can send an alarm and also register the event in the log for subsequent consultation.

This method results in an innovative way of working to establish the behaviour, management and regulation of installations, offering numerous advantages against other similar devices, for example by the fact that it not only takes individualized consumption readings, processes and monitors them, but also acts consequently on the electrical apparatus, making it possible to manage its consumption and obtain highly useful information in an automatic manner.

Additionally, the proposed system which enforces the management method offers the possibility of agents involved in energy consumption having "online" access to the information obtained from the installations and gathered in the system, simply using information management tools accessible from communication networks such as the MySQL databases.

The involved agents are the invention's immediate beneficiaries, which includes end users themselves, the electricity supply company, electricity traders, equipment manufacturers and even the Public Administration.

The end user benefits by having complete information relating to consumption and the status of its electrical installations that guarantees correct management of its electricity expense. The electricity company and trading agents can equally remotely access the system and communicate through it directly with the end user. On the basis of the detailed information gathered by the management system, the company can know the uses, habits and detailed profile of its client, which makes it possible to devise more personalized marketing and sales strategies, ensuring loyalization of the client in question, or to temporarily suspend apparatus in a programmed fashion, or to identify vital apparatus that must have an uninterrupted supply maintained in the case of programmed interruptions at the electricity companies themselves. Electrical apparatus manufacturers may learn how to correct possibly detected faults in future and to really know what clients demand. Where the Public Administration is concerned, access to complete information on the way electricity is consumed may serve to promote new energy saving policies or public awareness campaigns.

### DESCRIPTION OF THE DRAWINGS

To complement the present description and with a view to contributing towards a better understanding of the invention's characteristics, in accordance with a preferred embodiment thereof, a set of drawings is attached as an integral part of this description, that by way of illustration but not limitation, represent the following:
Figure 1.- Shows a schematic view of the modules that the management system object of the invention comprises and a general block diagram of its functioning taking the complete system into account.
Figure 2.- Shows a schematic view of the system's Master Module external communication interfaces, according to a possible embodiment of the invention.
Figure 3.- Shows a block diagram of the Analog Input Module, to be connected to the system's Master Module, with its possible external connections.
Figure 4.- Shows a block diagram of the Analog Output Module, to be connected to the system's Master Module, with its possible external connections.
Figure 5.- Shows a block diagram of the Digital Input Module, to be connected to the system's Master Module, with its possible external connections.
Figure 6.- Shows a block diagram of the Digital Output Module, to be connected to the system's Master Module, with its possible external connections.

### PREFERRED EMBODIMENT OF THE INVENTION

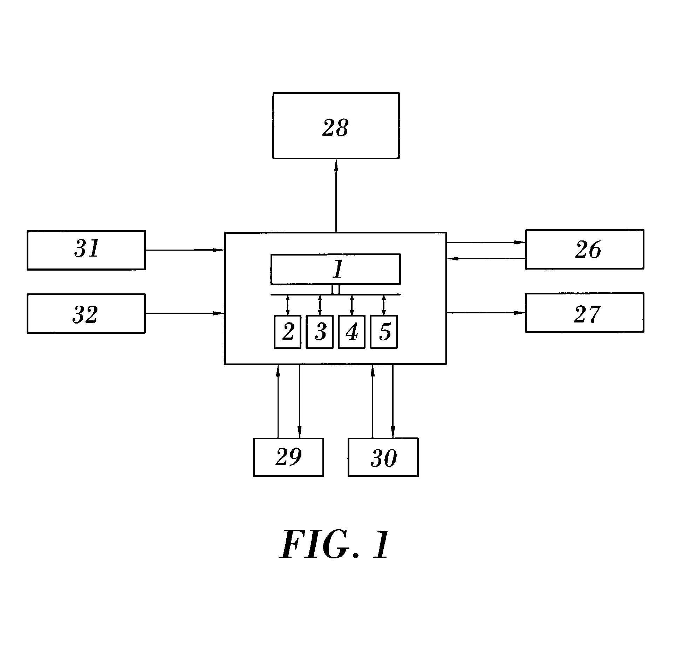

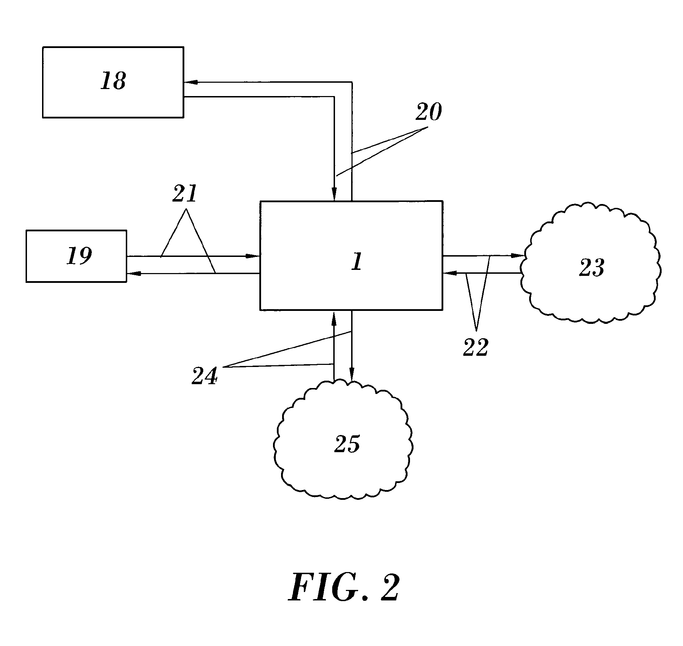

In view of the abovementioned drawings, a possible embodiment of the invention can be described as an electrical installations management system, capable of processing a series of analog and digital input signals (31), issuing from the electrical installations, on the values or statuses of which, it is capable of generating analog and/or digital output signals (32), that govern the functioning of said installations, with a modular architecture as shown in Figure 1, comprising the modules specified below shown separately in Figures 2-6.

Figure 2 shows the Master Module (1) whereto the remaining slave Modules (2, 3, 4, 5) are connected. The Master Module (1) comprises at least one microprocessor, digital information storage means, and at least one external communications interface. More specifically, the Master Module (1) in question possesses dynamic RAM memory and NAND FLASH memory of up to 16 Mb capacity, designed for migration of up to 800,000 events to the log. Optionally, an external memory of the type xD may be added of up to 128 Mb capacity connected to the Master Module (1), conferring on the system storage capacities of up to approximately 6 million events.

With regard to communications, this Master Module (1) has on the one hand an ETHERNET interface (22) that provides connectivity with TCP/IP networks (23) for 10 and 100 Mbps, and on the other hand a GSM/GPRS modem (24) for wireless mobile communications with GSM networks (25), meaning that the system can be used in almost any installation irrespective of how isolated or remote it may be. As other alternative and complementary communications interfaces, the Master Module (1) has internally two serial ports (20, 21), of the RS232 and RS485 standard respectively, for managing central alarm stations (18) or UPS uninterrupted power supply systems (19), which are external to the management system.

The system's behaviour will vary from one installation to one another according to the needs, as it can be openly and flexibly configured through the multiple parameters of which the system disposes. In all events, the Master Module (1) continuously executes two sub-routines, analysing the result obtained from the reading of the devices connected to its slave Modules (2, 3, 4, 5).

The first sub-routine consists of constantly reading all Modules (2, 3, 4, 5) connected to the Master Module (1). The information obtained is analysed in real time and, depending on the measured values, the configured actions are executed. Any change in value or status is instantly registered updating all the variables that intervene in the system.

In parallel, another sub-routine is executed which manages the communications of the Master Module (1) and, therefore, of all the system with the exterior, whether the one dedicated to TCP/IP networks (23) via the ETHERNET interface (22), or those related to wireless transmission of SMS, GSM and GPRS data through the GSM/GPRS modem (24). Additionally, the Master Module (1) incorporates an embedded Web server that, using FLASH technology, provides information on the system's status and offers the possibility of changing any configuration parameter through Web pages. Access to this Web server may be either through the ETHERNET interface (22) or wireless communication through the GSM/GPRS modem (24) with the GSM network (25) through the Point to Point protocol (PPP).

As explained earlier, events are registered in a log supported by the NAND FLASH memory and can be recovered through the ETHERNET (22) interface for storage also remotely, for example in a MySQL data table where they can be managed using the appropriate software.

Through the connection to the TCP/IP (23) network, it is possible to obtain system information remotely and for this purpose, in compliance with the objective of integration with other systems or standardization that the system's implementation intends, the HTTP protocol has been chosen as the one responsible for facilitating this task. Thus, any application realized in the remote part that uses this protocol can communicate with the system's Master Module (1) through standard applicable procedures. As a complement, the Master Module (1) responds to these requests with another standard protocol, known as XML, to a remote information management application (30). The use of the XML Extensible Markup Language means that any remote management application can be designed around the system with no limitations in terms of the programming language to be used or the platform on which it is to be installed.

Once all the information on the events generated in the system is also registered in a MySQL database, the data can be managed from an infinity of applications, with the interpreted language environment being high level PHP extensively used for creating dynamic HTML pages on Internet and the database support, including the MySQL base. However, any other programming language such as Visual Basic, Delphi, Kylix, C++ and even ActiveScript can be used for this end. This events information can be used to create statistics, curves, lists or any other type of visual format with which this data can be displayed, of such primary importance for the management of installations and valuation of results in terms of pursued energy savings.

Aside from the Master Module (1), the system consists of other Modules (2, 3, 4, 5) conceived according to the type of input (31) and output (32) signals they control.

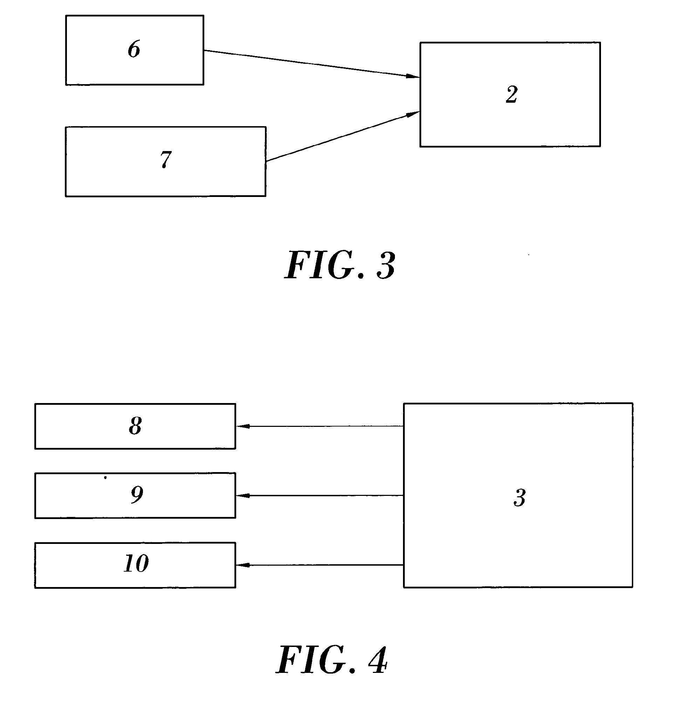

Figure 3 shows an Analog Input Module (2) connected to sensors (6, 7), according to the preferred embodiment, a light sensor (6) and temperature sensor (7), that generate input signals (31), which are analog and read by the Analog Input Module (2) in question. Their function is to communicate to the Master Module (1) the values of the input signals (31). A total of up to 4 Analog Input Modules (2) can be connected, which, with each admitting up to 8 inputs, provides up to 32 analog inputs.

Also connected to the Master Module (1) there is 1 or up to 4 Analog Output Modules (3) whereto at least one external analog device (8, 9, 10) is connected contemplated in the electrical installations, since it is responsible for the manoeuvres for governing such external analog devices (8, 9, 10) of the installations, such as for example proportional valves, lighting level controls, or motors for blinds. Each Analog Output Module (3), shown in Figure 4, admits between 4 and 8 outputs, meaning that the system can have a number of between 32 and 64 analog outputs.

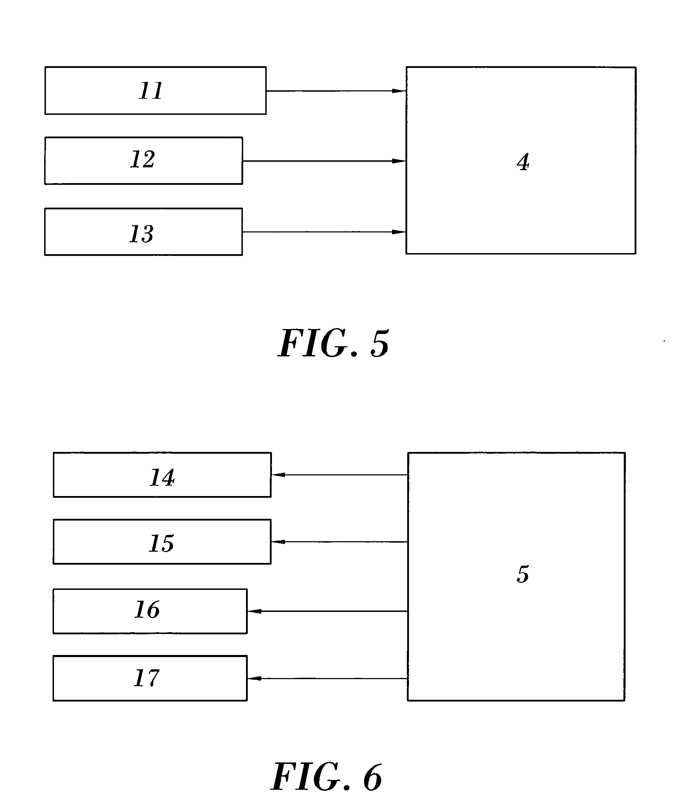

In relation to the digital input signals (31) whose status has to be read, they are connected to a Digital Input Module (4), as shown in Figure 5, with at least one external digital device (11, 12, 13) designed to generate the input signals (31) that are digital and obtained from the outputs of the installations' elements such as switches, detectors or relays. The Digital Input Module (4) is equipped with high precision instantaneous means for detecting changes in said input signals (31), irrespective of the task that the Master Module's (1) microprocessor may be performing meaning that changes of a very short duration in said input signals (31) can be detected.

There are two versions or options for realizing the Digital Input Module (4), with inputs free of voltage and with inputs with voltage for the following power ranges:
- 220 volts AC
- 12 to 24 volts DC
- 12 to 24 volts AC

Up to 16 Digital Input Modules (4) can be installed, providing a maximum number of 128 digital inputs.

According to Figure 6, a number of external actuators (14, 15, 16, 17) contemplated in electrical installations, such as for example lighting switches, ventilation; air-extraction or air-conditioning accesses are connected to a Digital Output Module (5) that delivers the digital output signals (32), having corresponding activating and deactivating means for said digital output signals (32). Each of the digital output signals (32) can adopt one of two states: active or inactive, and are outputs free of voltage. The Master Module (1) can have up to 16 Digital Output Modules (5) connected to it, totalling 128 digital inputs to govern the installations through the relevant external actuators (14, 15, 16, 17).

As a whole, the system consists of these slave Modules (2, 3, 4, 5) and Master Module (1), which are configurable electronic devices of a reduced size, capable of growing according to the specific needs of each installation, through an internal communications bus, preferably the Philips 12C bus, which connects the Master Module (1) with the rest of the Modules (2, 3, 4, 5), in a fast and simple manner without the need for cumbersome physical handling.

With the exception of the 12C communications bus, which is of internal use, the connections of Master Module (1) allows the communications interfaces with the exterior to be in view, providing the system with great capacity. Thus, the Master Module (1) can exchange information to/from the outside through any of the paths that can be observed in Figure 1: sending an SMS (26), sending data to a remote MySQL database server (28), or a Web server (29) by using the HTTP protocol with POST type messages.

## Claims

1. Electrical installations management system, capable of processing a number of analog and digital input signals (31), which come from electrical installations, and generating analog or digital output signals (32), which govern the functioning of said electrical installations, based on the value of said input signals (31), **characterised in that** it comprises:
at least one Analog Input Module (2) connected to at least one sensor (6, 7) designed to generate analog input signals;
at least one Analog Output Module (3) connected to at least one external analog device (8, 9, 10) in the electrical installations and designed to receive analog output signals;
at least one Digital Input Module (4) connected to at least one external digital device (11, 12, 13) designed to generate the digital input signals and that has means for detecting changes in said digital input signals;
at least one Digital Output Module (5) connected to at least one external actuator (14, 15, 16, 17) contemplated in the electrical installations and designed to receive digital output signals, and that has means for activating and deactivating said digital output signals;
a Master Module (1) connected to all the preceding Modules (2, 3, 4, 5) comprising at least one microprocessor, digital information storage means and at least one external communications interface;
an internal communications bus that connects the Master Module (1) with the rest of the Modules (2, 3, 4, 5).

2. Electrical installations management system, according to claim 1, wherein the digital input signals are free of voltage.

3. Electrical installations management system, according to claim 1, wherein the digital input signals have potential for a power range selected from 220 volts of AC, 12 to 24 volts of AC and 12 to 24 volts DC.

4. Electrical installations management system, according to any of the preceding claims, wherein the sensor (6, 7) is selected from a light sensor and a temperature sensor.

5. Electrical installations management system, according to any of the preceding claims, wherein the external analog device (8, 9, 10) is selected from a proportional valve, lighting apparatus, and a motor associated to a light concealing element.

6. Electrical installations management system, according to any of the preceding claims, wherein the external actuator (14, 15, 16, 17) is a switch.

7. Electrical installations management system, according to any of the preceding claims, wherein the external communications interface of the Master Module (1) is selected from a serial port RS-232, serial port RS-485, ETHERNET port and GSM-GPRS modem.

8. Electrical installations management system, according to any of the preceding claims, wherein the Master Module (1) further comprises an embedded Web server.

9. Electrical installations management method that, on the basis of a series of analog and digital input signals (31) coming from the electrical installations, generates analog or digital output signals (32), which govern the functioning of said electrical installations, **characterised in that** it comprises the following steps:
reading in real time of the values of the input signals (31) and output signals (32),
generating an event when a change occurs in any of the values of the input signals (31) or output signals (32), and
storing the digital information associated to the generated event.

10. Electrical installations management method, according to claim 9, further comprising a step of sending an alarm signal.

11. Electrical installations management method, according to claim 10, wherein, for the step of sending the alarm signal, at least one SMS short message is sent.

12. Electrical installations management method, according to either of claims 10 or 11, wherein, for the step of sending the alarm signal, at least one email is sent.

13. Electrical installations management method, according to any of claims 10, 11 or 12, wherein the digital information associated to the generated event is sent to a remote database.

14. Electrical installations management method, according to any of claims 10, 11, 12 or 13, wherein a POST message is sent to a remote Internet server.

15. Electrical installations management method, according to any of claims 10 to 14, further comprising a step of changing the status of the generated digital output signal.

16. Electrical installations management method, according to any of claims 10 to 15, further comprising a step of modifying the value of the generated analog output signal.
